(19) **Europäisches Patentamt European Patent Office Office européen des brevets**

(11) **EP 4 459 901 A1**

(12) **EUROPEAN PATENT APPLICATION**

(43) Date of publication:
06.11.2024 Bulletin 2024/45

(51) International Patent Classification (IPC):
*H04K 1/00* (2006.01)

(21) Application number: 24169174.0

(22) Date of filing: 09.04.2024

(52) Cooperative Patent Classification (CPC):
H04K 1/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.05.2023 US 202318141710

(71) Applicant: Nokia Technologies Oy
02610 Espoo (FI)

(72) Inventors:
• MOHAMMADI, Jafar
  Munich (DE)
• KOSKELA, Antti Herman
  Helsinki (FI)
• HONKALA, Mikko Johannes
  Espoo (FI)

(74) Representative: Nokia EPO representatives
Nokia Technologies Oy
Karakaari 7
02610 Espoo (FI)

(54) **A PRIVACY ENHANCING TECHNIQUE FOR LEARNING LOCATION DEPENDENT DATA OF USER EQUIPMENTS USED FOR IMPROVING QUALITY OF SERVICE**

(57) An apparatus comprising: at least one processor; and at least one memory storing instructions that, when executed by the at least one processor, cause the apparatus at least to: receive a signal to interference noise ratio experienced at a network node based on signal transmission from the apparatus; determine a privacy loss target; select a modulation size, based on the signal to interference noise ratio and the privacy loss target; and transmit, to the network node, at least one symbol using the selected modulation size.

600

| 601 | 1. | UE reports that it has n contribution data available + pilots | 651 | 1. | Public key exchange procedure according to some standard |
| 602 | 2. | Public key exchange and Encryption | 652 | 2. | BS reports the received SINR and channel to the UE, from pilots |

1. UE reports that it has n contribution data available + pilots
2. Public key exchange and Encryption
3. UE uses the expected SINR, Figure 4 and Figure 5 to see how much is and which constellation is required.
4. UE selects the constellation and uses K-RR to add randomness.
5. Send BS the selected constellation
6. UE transmits the data + pilots

1. Public key exchange procedure according to some standard
2. BS reports the received SINR and channel to the UE, from pilots

3. BS: sends ACK upon receiving data. The ACK message is produced only as a sign of signal detection, as there is no channel coding.
4. Repeat step 2.

**FIG. 6**

**Description**

TECHNICAL FIELD

The examples and non-limiting example embodiments relate generally to communications and, more particularly, to a privacy enhancing technique for learning location dependent data of UEs used for improving quality of service.

BACKGROUND

It is known to determine a location of a terminal device in a communication network, such as a wireless communication network.

SUMMARY

In accordance with an aspect, an apparatus includes: at least one processor; and at least one memory storing instructions that, when executed by the at least one processor, cause the apparatus at least to: receive a signal to interference noise ratio experienced at a network node based on signal transmission from the apparatus; determine a privacy loss target; select a modulation size, based on the signal to interference noise ratio and the privacy loss target; and transmit, to the network node, at least one symbol using the selected modulation size.

In accordance with an aspect, an apparatus includes: at least one processor; and at least one memory storing instructions that, when executed by the at least one processor, cause the apparatus at least to: transmit, to a user equipment, a signal to interference noise ratio experienced at the apparatus based on signal reception from the user equipment; receive, from the user equipment, at least one symbol with use of a modulation size, based on the signal to interference noise ratio and a privacy loss target; and decode the at least one symbol, wherein decoding the at least one symbol comprises demodulating the at least one symbol.

In accordance with an aspect, an apparatus includes: at least one processor; and at least one memory storing instructions that, when executed by the at least one processor, cause the apparatus at least to: receive a configuration that indicates at least one information element for which privacy protection is to be applied; transmit the configuration to at least one user equipment; and receive, from the at least one user equipment, data that has been encoded at least partially based on the configuration.

BRIEF DESCRIPTION OF THE DRAWINGS

The foregoing aspects and other features are explained in the following description, taken in connection with the accompanying drawings.

FIG. 1 is a block diagram of one possible and non-limiting system in which the example embodiments may be practiced.

FIG. 2 depicts a received signal in a 4 QAM constellation with Gaussian additive noise.

FIG. 3 is a depiction of 16 QAM and computation of privacy loss.

FIG. 4 depicts privacy loss, $\varepsilon$ vs SNR including given an SNR, how to compute $\varepsilon$ for a selected constellation order.

FIG. 5 depicts privacy loss $\varepsilon$ when carrying out k-RR with probability p and adding the thermal noise randomization on top of it.

FIG. 6 is a signaling diagram of a UE-controlled privacy method, based on the examples described herein.

FIG. 7 is a flowchart that implements a privacy method with components of a receiver.

FIG. 8 depicts a K-RR flowchart.

FIG. 9A is a flowchart illustrating a privacy method, based on the examples described herein.

FIG. 9B is a flowchart illustrating a privacy method, based on the examples described herein.

FIG. 10 illustrates a trusted firmware zone at the BS for privacy and security computations with no ability to be modified remotely.

FIG. 11 is a signaling diagram of a privacy method, based on the examples described herein.

FIG. 12 is an example apparatus configured to implement the examples described herein.

FIG. 13 shows a representation of an example of non-volatile memory media used to store instructions that implement the examples described herein.

FIG. 14 is an example method, based on the examples described herein.

FIG. 15 is an example method, based on the examples described herein.

FIG. 16 is a signaling diagram of a privacy method.

FIG. 17 is an example method, based on the examples described herein.

DETAILED DESCRIPTION OF EXAMPLE EMBODIMENTS

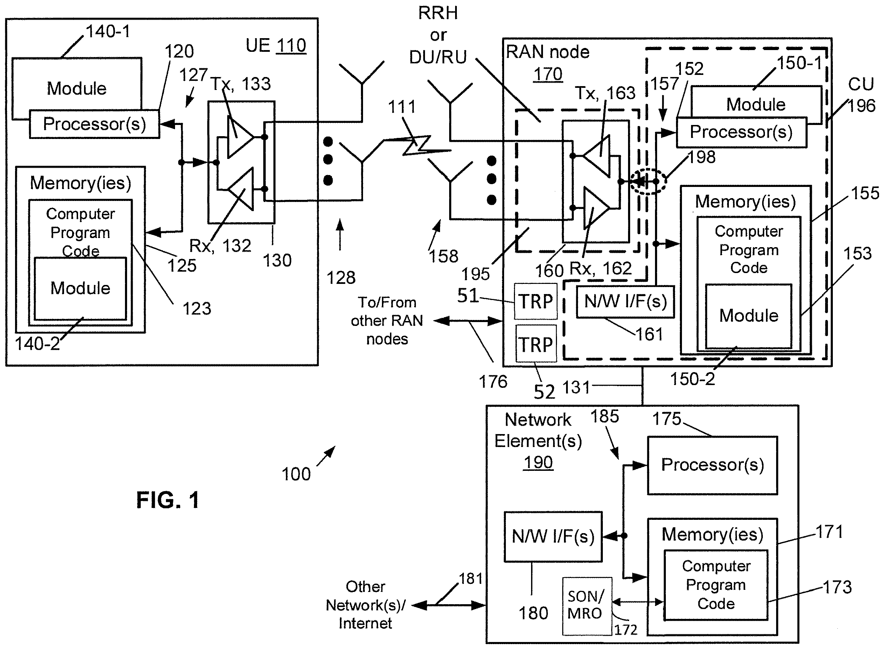

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access for wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, one or more memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

A RAN node / gNB can comprise one or more TRPs to which the methods described herein may be applied. FIG. 1 shows that the RAN node 170 comprises two TRPs, TRP 51 and TRP 52. The RAN node 170 may host or comprise other TRPs not shown in FIG. 1.

A relay node in NR is called an integrated access and backhaul node. A mobile termination part of the IAB node facilitates the backhaul (parent link) connection. In other words, the mobile termination part comprises the functionality which carries UE functionalities. The distributed unit part of the IAB node facilitates the so called access link (child link) connections (i.e. for access link UEs, and backhaul for other IAB nodes, in the case of multi-hop IAB). In other words, the distributed unit part is responsible for certain base station functionalities. The IAB scenario may follow the so called split architecture, where the central unit hosts the higher layer protocols to the UE and terminates the control plane and user plane interfaces to the 5G core network.

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (mobility management entity)/SGW (serving gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. Computer program code 173 may include SON and/or MRO functionality 172.

The wireless network 100 may implement network virtualization, which is the process of combining hardware and software network resources and network functionality into a single, software-based administrative entity, or a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback devices having wireless communication capabilities, internet appliances including those permitting wireless internet access and browsing, tablets with wireless communication capabilities, head mounted displays such as those that implement virtual/augmented/mixed reality, as well as portable units or terminals that incorporate combinations of such functions. The UE 110 can also be a vehicle such as a car, or a UE mounted in a vehicle, a UAV such as e.g. a drone, or a UE mounted in a UAV. The user equipment 110 may be terminal device, such as mobile phone, mobile device, sensor device etc., the terminal device being a device used by the user or not used by the user.

UE 110, RAN node 170, and/or network element(s) 190, (and associated memories, computer program code and modules) may be configured to implement (e.g. in part) the methods described herein, including a privacy enhancing technique for learning location dependent data of UEs used for improving quality of service. Thus, computer program code 123, module 140-1, module 140-2, and other elements/features shown in FIG. 1 of UE 110 may implement user equipment related aspects of the examples described herein. Similarly, computer program code 153, module 150-1, module 150-2, and other elements/features shown in FIG. 1 of RAN node 170 may implement gNB/TRP related aspects of the examples described herein. Computer program code 173 and other elements/features shown in FIG. 1 of network element(s) 190 may be configured to implement network element related aspects of the examples described herein.

Having thus introduced a suitable but non-limiting technical context for the practice of the example embodiments, the example embodiments are now described with greater specificity.

The examples described herein are targeted to allow data-driven optimization of wireless systems and applications via facilitating the collection, transfer and utilization of private data while preserving the privacy of the users.

Numerous studies have shown that historical private data, either in terms of probability distributions or simply averages over different points of a cell on the physical properties of the channel can improve the communications quality, both in network and application layers. More specifically, prior probabilities of SINR at given vicinities of a cell, which is experienced by a UE, can improve the link adaptation process, especially for extreme applications such as URLLC. Blockage prediction and service availability prediction for critical applications such as autonomous driving or co-pilot driving, where a consistent high quality network link is needed, are further established examples that require the geographic prior knowledge of the radio channel.

Differential privacy (DP) offers guarantees on the privacy of the data in exchange of reducing the accuracy of the end result. Randomizing a function of the data (functional perturbation) or the pure raw randomization of the data (input perturbation) or randomizing the output of a function (output perturbation) are among the widely used DP schemes.

The so called "radio heat map" (RHM), which basically constructs a digital twin of the radio environment is used to better assess the link quality as a function of movement or location.

While most work on this problem focuses on applying the data for improving the link quality, a few only relate to how to collect the data. Among them the practical option of using UE on a running network to crowdsource the data has been studied. Crowdsourcing location tagged data, while seems practical, poses the question of privacy according to General data protection regulations (GDPR) or the California Consumer Privacy Act (CCPA).

In the light of privacy restrictions, described herein are practical schemes that allow data aggregation from the UEs while guaranteeing their privacy.

The main problem tackled by the examples described herein is the collection and transfer of private data to improve future performance of the network and network applications. Collecting data with multiple attributes, e.g. location, time, PHY/MAC info, in a private way has not been well studied for RAN applications.

Many applications benefit from accurate digital twins, but in dynamic real-world use cases, in order to have up-to date digital twins, private data is utilized.

As an example, URLLC link adaptation would benefit from a digital twin (historical private data) e.g., in the form of radio heat maps. Differential privacy (DP) can be used to protect the privacy when building the maps, but since DP adds randomness to the data, thus reducing the utility of the applications, e.g. it might lead to underperforming URLLC. On the other hand, very small randomness might not be enough to guarantee privacy. The main problem is how to facilitate the application of privacy enhancing technologies, such as DP, in a way that we achieve a better trade-off between privacy loss and accuracy of data which is collected. Use cases include hand-over, beam sweeping, and network planning.

Differential privacy for wireless: It is possible to use federated learning with differential privacy in a wireless network scenario, such as with using thermal noise to enhance privacy. A power control loop may be hacked to maintain a semi-constant signal to noise ratio (SNR) such that the noise could be considered as a source of randomness in the sense of DP. This however is prone to multiple fatal assumptions: 1) the existence of an eavesdropper with better SNR (located closer to the UE), 2) sudden variation of the SNR due to interference, high SNR means weaker privacy, 3) privacy guarantee is a weaker one with nonzero $\delta > 0$ ($\delta$ is the probability of full data exposure), 4) changing the transmission power according to privacy requirements often leads to working in inefficient regimes of the power amplifier at the UE, which is not very practical. The federated learning with use of thermal noise method only provides the less optimal ($\epsilon > 0$, $\delta > 0$), whereas the method described herein provides $\epsilon > 0$, $\delta = 0$. Also, the federated learning with use of thermal noise method does not consider a truncated Gaussian noise effect, whereas the examples described herein do not use additive Gaussian noise directly. Further, the federated learning with use of thermal noise method uses power control (PC) to fix the power to a desired one so that the messages are noisy. PC is notoriously slow to track the dynamic changes in the channel. The examples described herein offer special signaling for that purpose. In addition, the examples described herein provide constant power based on change of constellations to achieve the desired privacy. Constant power implies better power amplifier efficiency. The examples described herein include signaling that allows for more private data transmission in case of dynamic channel change, which is not implemented with the federated learning with use of thermal noise method. The examples described herein additionally include the use of encryption to consider the case of a wireless eavesdropper with a better channel or a fake base-station (man in the middle attack), which is not implemented with the federated learning with use of thermal noise method.

Application to wireless heat radio maps: Regarding the need for radio heatmaps, a statistical knowledge of the wireless channel given a certain neighborhood or region can help to improve the link adaptation for URLLC scenarios. Methods may include keeping the wireless signal map updated using compressive sensing, and reconstructing the wireless map by acquiring few samples only with high accuracy. However, these methods do not consider the problem of privacy for producing or reconstructing wireless maps based on UE reported information.

Differential privacy with heat maps: A differentially private heat map of any type of data may be produced. This method however does not consider the wireless channel and thermal noise as a privacy enhancing tool. These methods rather treat communication links and error free secure pipelines of data. While this use case is related to reconstructing a radio heatmap for wireless signal strength, the methodology is off the shelve DP, or information-theoretic privacy. The differentially private heat map of any type of data does not consider privacy for free using thermal noise, and does not consider using constellations to gain privacy without cost.

The methods and other examples described herein consider the wireless system as a source of randomness that can be used carefully to enhance privacy.

The examples described herein present a clever use of the intrinsic randomness in wireless communications (e.g. thermal noise, wireless channel, etc.) to enhance privacy and accuracy utility, in a unique way, which allows the collection, transfer, and utilization of private data. In turn, this private data can be used to construct and update digital twins for downstream applications, such as digital twins. An example application is URLLC link adaptation, which benefits greatly from an accurate and up-to-date digital twin e.g. in the form of radio heat map.

In many DP methods, one simply adds noise (with a certain tractable distribution, e.g. Laplace or Gaussian) to the process or directly to the data, to enhance its privacy. The measure of privacy is done via techniques introduced in DP literature. The added noise is almost always generated by a pseudo-random noise generator (PRNG) in a compiler, which has certain limitation (related to cracking random number generators using machine learning) and might be prone to be predictable.

Wireless communications applications are constantly combating thermal noise, since the signals are rather weak and attenuate in square of the distance. Thermal noise is a naturally occurred noise (e.g., from receiver and transmitter electronics), with a quantum level definition of randomness, which is the intrinsic randomness as opposed to undetermined event modelled by randomness (e.g. PRNG).

In one embodiment of the examples described herein, the intrinsic noise process that operates on transmitted symbols is utilized as a randomized DP mechanism via adapting the constellation size. The additive thermal noise is distributed according to the Gaussian distribution and the de-mapper, and the communications receiver acts as a quantizer.

In another embodiment of the examples described herein, a signaling between the UE and BS is implemented to realize the current SINR and adjust the constellation number according to the targeted privacy level described by the parameter epsilon. This provides the means to acquire most of the needed noise from the natural randomness in a wireless system.

The examples described herein use the thermal noise in an uncoded transmission as the randomized mechanism, in the sense of DP. However, as opposed to tweaking the power control to achieve a weaker DP, the examples described herein use of a constellation number (modulation number) to adjust different ε which is targeted.

Advantages and technical effects of the herein described solution include: 1) the use of nondeterministic randomness from thermal noise instead of deterministic noise produced by PRNG, 2) *privacy for free:* including privacy enhancing technology with close to zero cost at the PHY layer, which is an enormous advantage, 3) use of constellation number leads to (ε, 0) privacy, which is mathematically proven to be stronger than when $\delta > 0$ is not zero, 4) in addition to thermal noise, privacy at the BS is guaranteed by performing an additive mechanism at the BS, in case the added noise by the receiver was not enough according to sudden channel changes, 5) a main use case considering digital twins, e.g., radio map generation for link adaptation network planning, indoor positioning and navigation, etc., that requires privacy, which is a novel application for this novel technique, 6) a mechanism to signal protection in case of eavesdropper presence, as opposed to wireless federated learning through uncoded transmission with adaptive power control.

## 1. A brief overview of differential privacy (DP)

Differential privacy (DP) was originally proposed to give formal guarantee of privacy in case commonly used anonymization techniques (such as k-anonymity and 1-divergence) are not sufficient. DP is a technique of such a statistical nature that once an algorithm or data is protected with DP, no matter how the output of the algorithm or the data is further processed, the privacy of individuals in the data set stays protected. The original motivation for proposing this strong definition of privacy came from the observation that combining data from different sources can break privacy. DP can help to comply with data privacy regulations such as GDPR and CCPA.

### Basic Definitions

A DP guarantee provides a mathematical upper bound for the risk of leaking information about an individual and it allows a system to quantify a precise level of acceptable individual level risk. DP is described using probability theory and mathematically the definition is given as follows. Two data sets $X$ and $Y$ are neighbors if one data set can be obtained by replacing a single data entry in the other data set. Let $\varepsilon > 0$ and $\delta \in [0,1]$ ($\varepsilon$ and $\delta$ are the DP parameters).

A randomized function $M(X) : X^N \rightarrow \mathbb{R}$ is (ε, δ)-DP if for every pair of neighboring data sets $X$ and $Y$ and for every outcome $S \subset \mathbb{R}$ the following inequality is satisfied:

$$\mathbb{P}(M(X) \in S) \leq e^{\varepsilon}\mathbb{P}(M(Y) \in S) + \delta.$$

The parameter $\delta$ can be interpreted as the probability of a total data breach, and the smaller the $\varepsilon$, the less probable it is to tell whether the output originated from $X$ or $Y$, i.e., the less probable it is to notice the presence of any individual and the more privacy-preserving the mechanism is.

When $\delta = 0$, it is said that the mechanism is $\varepsilon$-DP. Consider e.g. randomized response: If a yes/no answer is a lie with probability 0.5, one can calculate that the above definition is satisfied for $\varepsilon$ = log 3. If the probability of lying p increases, privacy increases and $\varepsilon$ get smaller (specifically, then $\varepsilon = \log\frac{1-p}{p}$ ). In some cases non-zero $\delta$ has to be allowed (e.g. when adding Gaussian noise).

A motivating example is given by the so-called exponential mechanism. This mechanism can be described for simplicity as follows. Suppose data is described by integers 1, ..., n, and suppose a *private mechanism M* takes as an input data $i$ and randomly outputs $j$, such that the data $j$ is output probability $p_{ij}$. Then the mechanism M is $\varepsilon$-DP for

$$\varepsilon = \max_{j} \max_{i_1, i_2} \log\frac{p_{i_1 j}}{p_{i_2 j}}.$$

This formula can be read verbally such that, for all outputs $j$, $e^{\varepsilon}$ gives an upper bound for the ratio of probabilities for the output originating from $j_1$ and $j_2$. If this ratio is close to 1 (i.e., if $\varepsilon$ is close to 0), the given any pairs of inputs $j_1$

and $j_2$, the adversary cannot tell where the output originated from. I.e., this is a very strong definition of privacy (this worst case adversary is very strong), and it gives this same protection for all post-processing of this randomization.

DP is a highly recommended method and is advocated within IETF (Privacy Preserving Measurement (ietf.org)).

**DP: randomized response**

If we consider a query with categorical answer (e.g. 1, 2, ..., k), we can use k-randomized response: we give the true answer with probability 1-p, and with probability p, give a random wrong answer [refer e.g. to Dwork, C. and Roth, A. (2014). The algorithmic foundations of differential privacy. Found. Trends Theor. Comput. Sci., 9(3-4):211-407].

It is easy to show that this mechanism is $\varepsilon$-DP for
$$\varepsilon = \log \frac{(k-1)(1-p)}{p}.$$

**2. Main results for QAM modulation**

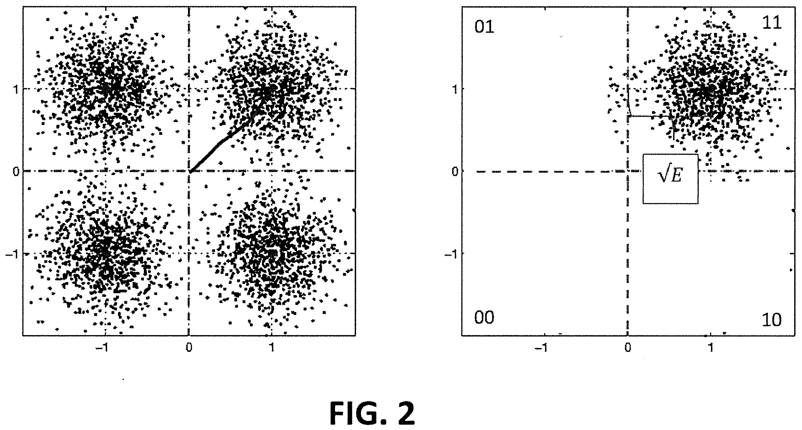

FIG. 2 depicts the received signal in 4 QAM constellation with Gaussian additive white noise. In an uncoded communication, the received signal is modulated by e.g. 4 QAM symbols. The receiver obtains a noisy version of each transmitted symbol, which after using an optimal de-mapper imposes calculable probabilities on available choices. This is called *modulation mechanism,* which is very similar to the exponential mechanism.

The privacy loss may be computed by forming the probability definitions below:

$$max\, log\left(\frac{P[f(S' \subset \mathcal{D}) = q]}{P[f(S \subset \mathcal{D}) = q]}\right) \leq \epsilon$$

Where, here $S = \{s_1, s_2 \dots, s_n\}$ and $S' = \{s_1 s_2, \dots, s_n'\}$ are two sequences of symbols that are different only at one symbol. The condition has to hold for any outcome $\mathcal{D}$ of the randomized function $f$. The randomized function $f(\cdot)$ is the *modulation mechanism* and $q \in \{00, 01, 10, 11\}$ is the outcome of the demapper. This maximization could be achieved, without loss of generality, when $s_n = q = 00$ and $s_n = 11$. The maximum becomes:

$$log\left(\frac{P[f(00 \subset \mathcal{D})=00]}{P[f(11 \subset \mathcal{D})=00]}\right) = \frac{\frac{1}{\sqrt{\pi N_0}}\int_{-\infty}^{0} exp\left(\frac{-(x+\sqrt{E})^2}{N_0}\right).dx \int_{-\infty}^{0} exp\left(\frac{-(x+\sqrt{E})^2}{N_0}\right).dx}{\frac{1}{\sqrt{\pi N_0}}\int_{-\infty}^{0} exp\left(\frac{-(x-\sqrt{E})^2}{N_0}\right).dx \int_{-\infty}^{0} exp\left(\frac{-(x-\sqrt{E})^2}{N_0}\right).dx} \leq \epsilon,$$

where E is the signal power and $N_0 = 2\sigma^2$ is the thermal noise power. As per tradition in computing symbol error rate, the above formula can be rewritten in terms of the Q function:

$$Q(z) = \frac{2}{\sqrt{\pi}}\int_{z}^{\infty} e^{-x^2} dx.$$

Then the privacy loss becomes:

$$\frac{P(R \succ E)P(I \succ E) = Q\left(-\sqrt{2E/N_0}\right)^2}{P(R < -E)P(I < -E) = (1 - Q\left(-\sqrt{2E/N_0}\right))^2} = \frac{Q\left(-\sqrt{2E/N_0}\right)^2}{Q\left(\sqrt{2E/N_0}\right)^2}$$

$$= log\left(\frac{Q\left(-\sqrt{y}\right)}{Q\left(\sqrt{y}\right)}\right)^2$$

$$SNR\_4QAM = 2E/N_0 = y$$

The extension to $2^{2n}$ = M-QAM, is rather straightforward:

**n=2 implies 16_QAM**

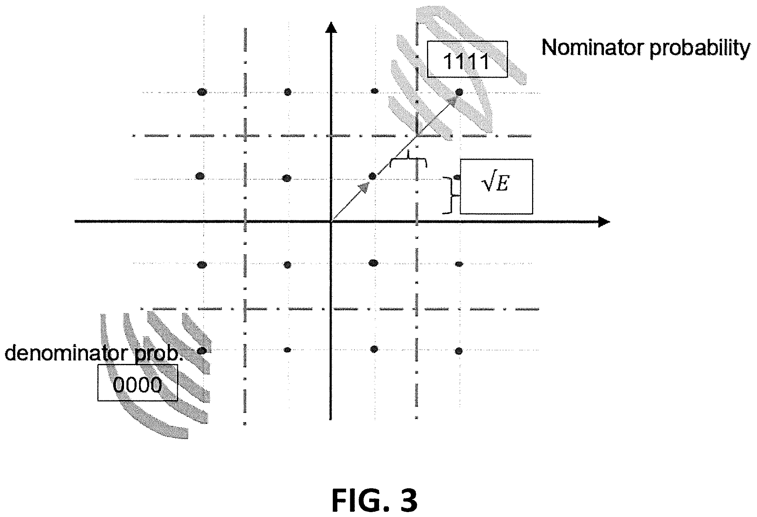

FIG. 3 is a depiction of 16 QAM and computation of privacy loss. The privacy loss for 16 QAM would be

$$log\left(\frac{P[f(1111\subset\mathcal{D})=1111]}{P[f(0000\subset\mathcal{D})=1111]}\right) = log\frac{Q\left(-\sqrt{2E/N_0}\right)^2}{(1-Q(-\sqrt{10E/N_0}))^2} = log\frac{Q\left(-\sqrt{2E/N_0}\right)^2}{(Q(\sqrt{10E/N_0}))^2} =$$

$$log\frac{Q\left(-\sqrt{y/10}\right)^2}{(Q(\sqrt{y/2}))^2}$$

$$SNR\_16QAM = \left(\frac{1}{4}(2 + 2x10 + 18)E\right)/(N_0/2) = 20E/N_0 = y$$

**n=3 implies 64_QAM**

$$64\_QAM = log\frac{Q\left(-\sqrt{2E/N_0}\right)^2}{(Q(\sqrt{18E/N_0}))^2} = log\frac{Q\left(-\sqrt{y/42}\right)^2}{(Q(\sqrt{y/4.6}))^2}$$

$$SNR\_64QAM = \left(\frac{1}{16}(2 + 2x10 + 18 + 2x26 + 2x50 + 2x34 + 2x58 + 2x74 + 50 + 98)E\right)/(N_0/2) = 84\,E/N\_0 = y$$

**n=4 implies 256_QAM**

$$356\_QAM = log\frac{Q\left(-\sqrt{2E/N_0}\right)^2}{(Q(\sqrt{26E/N_0}))^2} = log\frac{Q\left(-\sqrt{y/117}\right)^2}{(Q(\sqrt{y/9}))^2}$$

$$SNR\_256 = 234\,E/N\_0$$

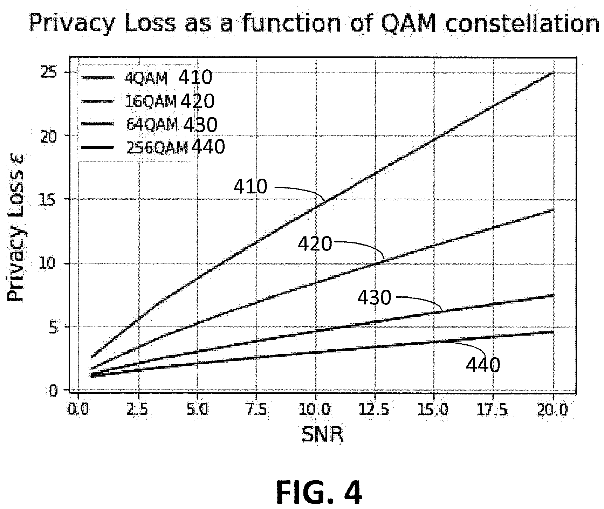

FIG. 4 is a graph showing privacy loss ε as a function of QAM constellation, and shows given an SNR how to compute the ε for a selected constellation order. Plots 410 (4QAM), 420 (16QAM), 430 (64QAM), and 440 (256QAM) are shown. FIG. 4 may be used when selecting a privacy loss target, which privacy loss target may be based on an accuracy target for an encoding or decoding of the data. In this sense the accuracy target may be built into the privacy loss target.

The size of the set of symbols transmitted or decoded is given by the modulation size. For 4QAM, the size of the set of possible symbols is 4, given four symbols 00, 01, 10, and 11. For 16QAM, the size of the set of possible symbols is 16, and so on.

**3. Adding artificial noise = lowering epsilon**

Recall the privacy loss in case of 4QAM: the maximum log ratio is obtained from the corners:

$$\frac{P[f(00\subset\mathcal{D})=00]}{P[f(11\subset\mathcal{D})=00]} = \frac{Q\left(-\sqrt{2E/N_0}\right)^2}{(1-Q(-\sqrt{2E/N_0}))^2} = \frac{Q\left(-\sqrt{2E/N_0}\right)^2}{Q(\sqrt{2E/N_0})^2}$$

The system can increase epsilon by carrying out k-randomized response [DR14] when coding the message: with a probability (1-p) (a parameter) keep the true symbol and with probability p/3 take one of the other symbols. Then, the ratio above is replaced by

$$\frac{(1-p)P[f(00 \subset \mathcal{D}) = 00] + \frac{p}{3}P[f(01 \subset \mathcal{D}) = 00] + \frac{p}{3}P[f(10 \subset \mathcal{D}) = 00] + \frac{p}{3}P[f(11 \subset \mathcal{D}) = 00]}{(1-p)P[f(11 \subset \mathcal{D}) = 00] + \frac{p}{3}P[f(01 \subset \mathcal{D}) = 00] + \frac{p}{3}P[f(10 \subset \mathcal{D}) = 00] + \frac{p}{3}P[f(00 \subset \mathcal{D}) = 00]}$$

Here $P[f(00 \subset \mathcal{D}) = 00]$ and $P[f(11 \subset \mathcal{D}) = 00]$ are as given above and

$$P[f(01 \subset \mathcal{D}) = 00] = P[f(10 \subset \mathcal{D}) = 00] = Q\left(-\sqrt{2E/N_0}\right)Q\left(\sqrt{2E/N_0}\right).$$

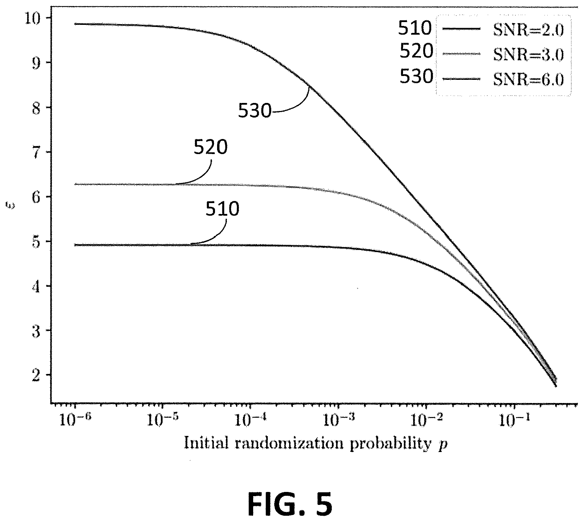

As a function of initial randomization probability $p$, the obtained epsilons are depicted in FIG. 5. FIG. 5 thus shows the privacy loss when k-RR is performed with probability and when the thermal noise randomization is added in addition to k-RR. At the horizontal parts of the curve the thermal noise dominates. Plots 510 (SNR=2.0), 520 (SNR=3.0), 530 (SNR=6.0) are shown.

This generalizes to higher order modulations: for example, in case of 16QAM the systems lists all the 16 transition probabilities for the thermal noise. The nominator and denominator in the log ratio are elements of the matrix product $P_{thermal}P_{kRR}$ where $P_{thermal}$ is the stochastic transition matrix of the thermal noise and $P_{kRR}$ is the stochastic transition matrix of k-RR (i.e. (1-p)'s on the diagonal, otherwise p/(d-1)'s in case there are d points in the constellation).

In case of an eavesdropper, the receiver sees the distribution $P_{thermal}P_{kRR}(message)$, and by data processing inequality the epsilon is at most the epsilon of $P_{kRR}(message)$, i.e., the randomness given by the k-RR would always protect the privacy.

Thus, the system can randomize each symbol as follows: if there are k symbols in the constellation, the correct symbol is chosen with probability 1-p and each of the rest of the symbols is chosen with probability p/(k-1).

In another example, there is sequence of data (represented by symbols in the constellation) and each data point is randomized, independently of each other, such that with probability p the true data point (represented by a symbol) is replaced with a random wrong symbol. In this example convention, p represents a replacement probability.

In another example, a symbol is chosen from the set of possible symbols based on a probability distribution. For example, if the set of symbols is {00, 01, 10, 11}, a symbol of a sequence of symbols is coded by choosing one of 00, 01, 10, or 11 with the probability distribution. In this example, the k in k-RR is 4, or the size of the set of symbols.

**4. Signaling and process full flow chart**

Described herein are two methods to use the modulation technique combined with K-RR.

**The first method,** UE-controlled privacy, which is a more private and realistic method, includes the BS sending a periodic updated SINR at the BS from that UE. The UE uses FIG. 4 (or derivation to generate FIG. 4) to compute what level of privacy the thermal noise provides, and adds the remaining needed randomness according to the choice of p by using K-randomized response as depicted in FIG. 5.

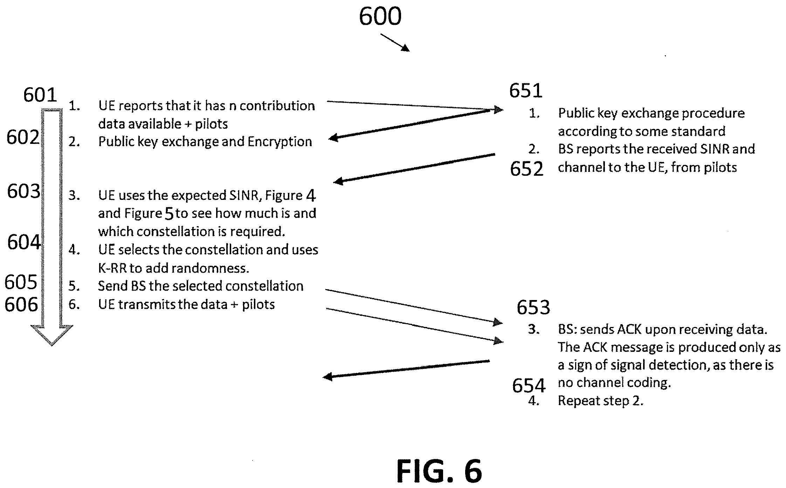

FIG. 6 is a signaling diagram of a UE-controlled privacy method 600, based on the examples described herein, performed with a UE (e.g. UE 110) and a base station (e.g. RAN node 170). At 601, the UE reports that is has n contribution data available and pilot signals. At 651, the UE and BS participate in a public key exchange procedure according to a standard. At 602, the UE performs public key exchange and encryption. At 652, the BS reports the received SINR and channel to the UE from the pilot signals. At 603, the UE uses the expected SINR, FIG. 4 and FIG. 5 to determine a privacy loss and which constellation to select. At 604, the UE selects the constellation and uses K-RR to add randomness. At 605, the UE transmits the selected constellation to the BS. At 606, the UE transmits the data and pilot signals. At 653, the BS transmits an acknowledgement upon receiving the data and/or the pilot signals transmitted at 606. The acknowledgement message is produced only as a sign of signal detection, as there is no channel coding. At 654, the BS repeats step 2 corresponding to item 652.

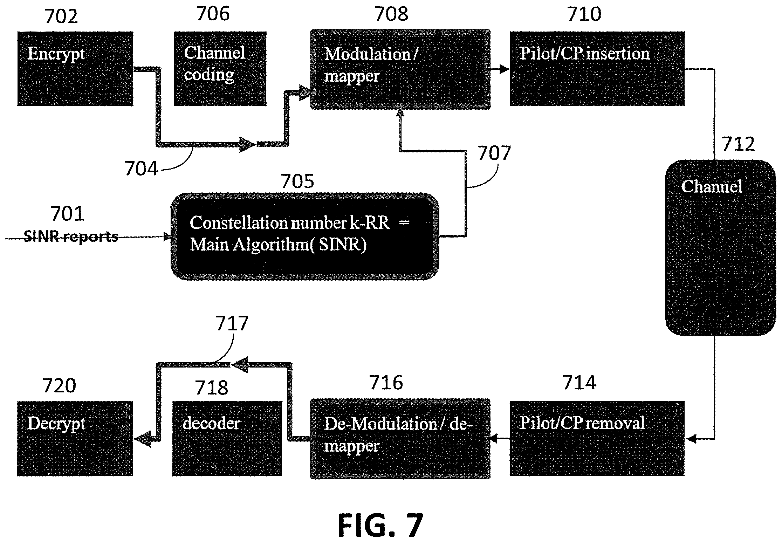

FIG. 7 is a flowchart that implements a privacy method with components of a receiver (e.g. with receiver 132 of UE 110 and/or receiver 162 of RAN node 170). At 701, SINR reports are received to determine at 705 a constellation number and optionally perform k-RR. The output 707 of item 705 is provided as input to modulation or mapper 708, which modulation or mapper 708 receives as input an output 704 of encryption 702. Channel coding is performed at 706. The result of the modulation or mapping 708 is provided to pilot and/or CP insertion 710, an output of the pilot or CP insertion 710 is provided to channel 712, and an output of channel 712 is provided to pilot and/or CP removal 714.

The output of pilot and/or CP removal 714 is provided to demodulation and/or demapper 716, and the output 717 of the demodulation and/or demapper 716 is provided for decryption of the data at 720. Also shown is decoder 718.

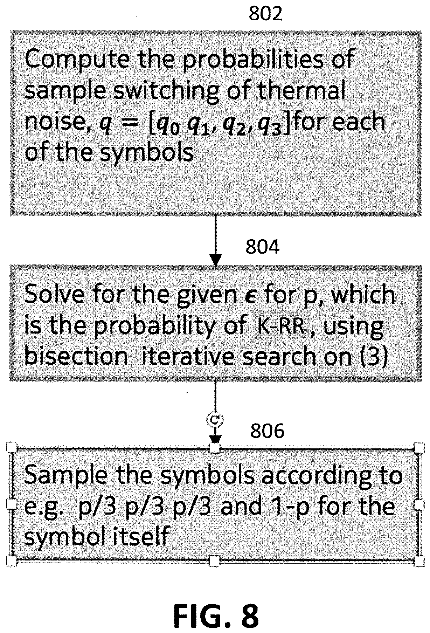

FIG. 8 depicts a K-RR flowchart. At 802, the method includes computing the probabilities of sample switching of thermal noise, $q = [q_0, q_1, q_2, q_{23}]$ for each of the symbols. For 4QAM (where $y$ = SINR):

$$q_0 = Q\left(-\sqrt{y}\right)^2, q_1 = q_2 = Q\left(-\sqrt{y}\right)Q\left(\sqrt{y}\right), q_3 = Q\left(\sqrt{y}\right)^2$$

At 804, the method includes solving $\varepsilon$ for the given for p, which is the probability of K-RR, using bisection iterative search on equation 1 below:

$$\varepsilon = \log\left(\frac{(1-p)\,q_0 + \frac{p}{3}q_1 + \frac{p}{3}q_2 + \frac{p}{3}q_3}{(1-p)\,q_1 + \frac{p}{3}q_0 + \frac{p}{3}q_2 + \frac{p}{3}q_3}\right) \quad \text{(Equation 1)}$$

At 806, the method includes sampling the symbols according to e.g. p/3, p/3, p/3, and (1-p) for the symbol itself. For example, symbol x (e.g. 11) is supposed to be privatized with K-RR, which implies with probability (1-p) choose sample x (e.g. 11) and with probability p choose randomly any of the other symbols (e.g. 00, 01, 10).

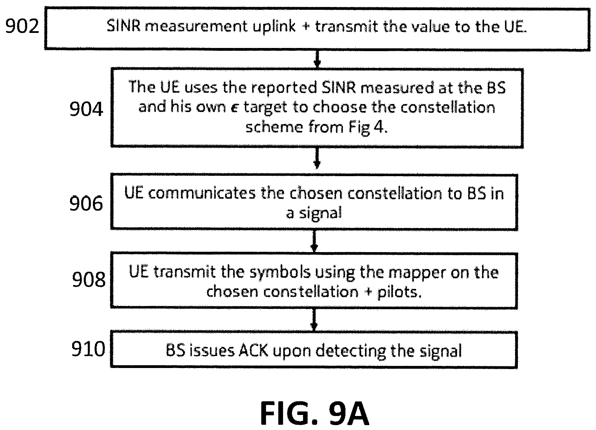

FIG. 9A is a flowchart of a privacy method described herein, performed with a BS (e.g. RAN node 170) and a UE (e.g. UE 110). At 902, the base station measures SINR from an uplink transmission, and the base station transmits the measured SINR to the UE. At 904, the UE uses the reported SINR measured at the BS and an epsilon ($\varepsilon$) target of the UE to choose the constellation scheme (e.g. those shown in FIG. 4). At 906, the UE communicates the chosen constellation to the BS in a signal. At 908, the UE transmits the symbols using the mapper on the chosen constellation, and transmit pilot signals (e.g. on the chosen constellation). At 910, the BS issues an ACK upon detecting the symbols and/or the pilot signals.

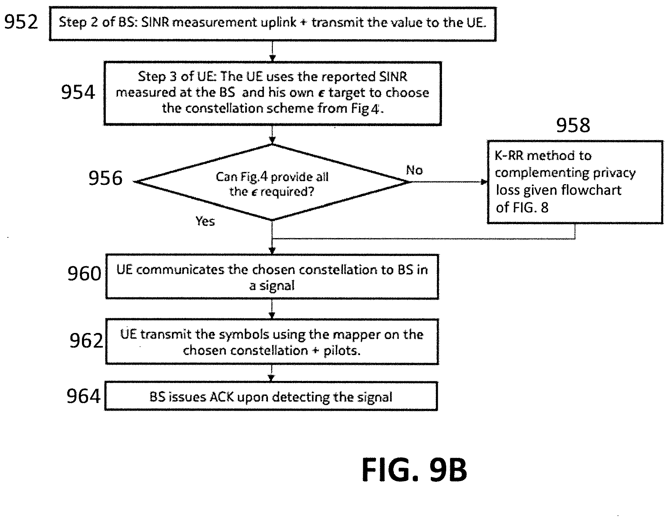

FIG. 9B is a flowchart of a privacy method described herein, performed with a BS (e.g. RAN node 170) and a UE (e.g. UE 110). At 952 (e.g. corresponding to item 652 of FIG. 6), the BS measures the SINR of an uplink signal, and transmits the value of the SINR to the UE. At 954, (e.g. corresponding to item 603 of FIG. 6), the UE uses the reported SINR measured at the BS and a target privacy loss $\varepsilon$ of the UE to choose a constellation scheme, such as those shown in FIG. 4. At 956, the UE or BS determines whether the chosen constellation scheme can meet the target privacy loss $\varepsilon$. If at 956 it is determined by the UE or BS that the chosen constellation scheme cannot provide the required privacy loss $\varepsilon$ (e.g. "No"), the method transitions to 958. If at 956 the UE or BS determines that the chosen constellation scheme can provide the required privacy loss $\varepsilon$ (e.g. "Yes"), the method transitions to 960. At 958, the UE or BS performs K-RR from the flow chart of FIG. 8 to complement the privacy loss. At 960, the UE communicates the chosen constellation to the BS in a signal. At 962, the UE transmits the symbols that make up the data using the mapper on the chosen constellation, and transmits pilot signals (e.g. on the chosen constellation). At 964 (e.g. corresponding to item 653 of FIG. 6), the BS issues an ACK upon detecting the signal.

**In the second method,** the BS, or far edge node, is responsible to compensate for the higher epsilon ($\varepsilon$) achieved by the thermal noise. The BS performs these operations, in a hardware trusted zone existing to protect from malicious software updates. The BS can also use the k-randomized response such as that depicted in FIG. 5.

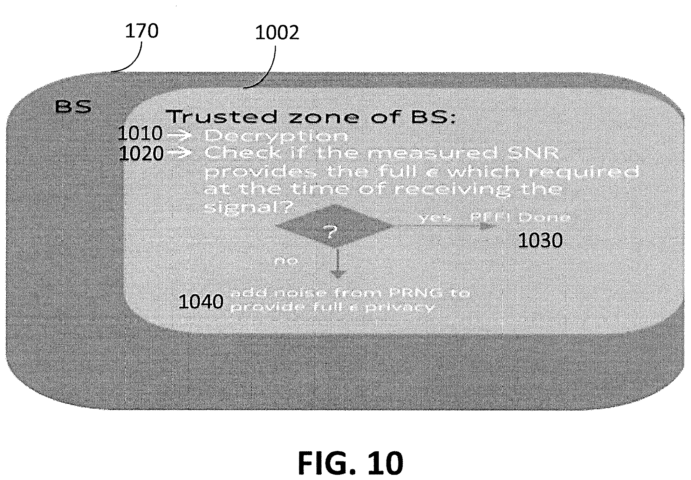

FIG. 10 illustrates planning a trusted firmware zone 1002 at the BS 170 for privacy and security computations with no ability to be modified remotely. FIG. 10 further shows a method implemented within the trusted zone 1002 of the BS 170. At 1010, the BS performs decryption. At 1020, the BS checks if the measured SNR provides the full $\varepsilon$ required at the time of receiving the signal. If the BS determines at 1020 that the measured SNR provides the full $\varepsilon$ required at the time of receiving the signal (e.g. "yes"), the method transitions to 1030. If the BS determines at 1020 that the measured SNR does not provide the full $\varepsilon$ required at the time of receiving the signal (e.g. "no"), the method transitions to 1040. At 1030, the method is done. At 1040, the BS adds noise from a PRNG or from using K-RR to provide full $\varepsilon$ privacy.

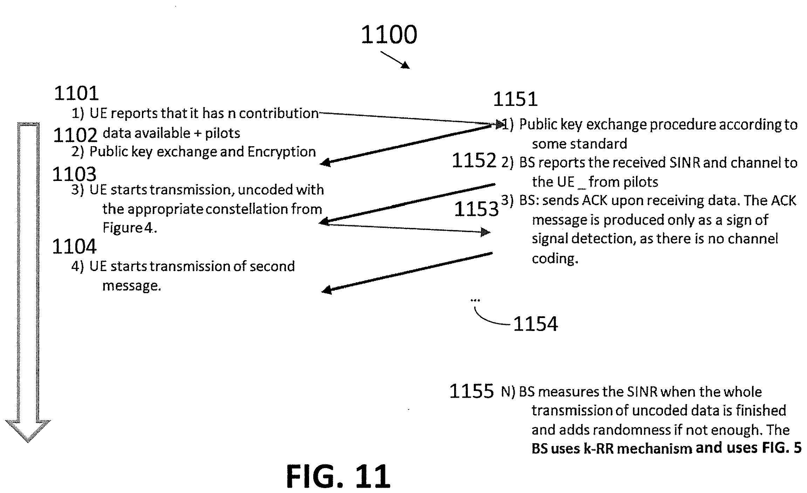

FIG. 11 is a signaling diagram of a privacy method 1100 performed with a UE (e.g. UE 110) and a base station (e.g. RAN node 170), based on the examples described herein. At 1101, the UE reports that is has n contribution data available and pilots. At 1151, the base station participates in a public key exchange procedure with the UE according to a standard. At 1102, the UE participates in the public key exchange procedure and performs encryption. At 1152, the base station reports the received SINR and channel to the UE from the pilots. At 1103, the UE starts transmission, uncoded with the appropriate constellation from FIG. 4. At 1153, the BS sends an acknowledgment upon receiving data. The acknowledgement message is produced only as a sign of signal detection, as there is no channel coding. At 1104, the UE starts transmission of a second message. The method continues or repeats as indicated at 1154 for UE contributions after the second message up to the nth contribution. At 1155 (after receiving the nth contribution), the base station measures the SINR when the whole transmission of uncoded data is finished and adds randomness if not enough. The base station uses the k-RR mechanism and uses FIG. 5.

In the herein described concept, the UE is accumulating data with location and time labels, throughout the time that the US has spent in the cell. Then at the point when the amount of data collected hits a certain level the UE starts communicating with the BS on the transfer of the private data for the purpose of improving the network.

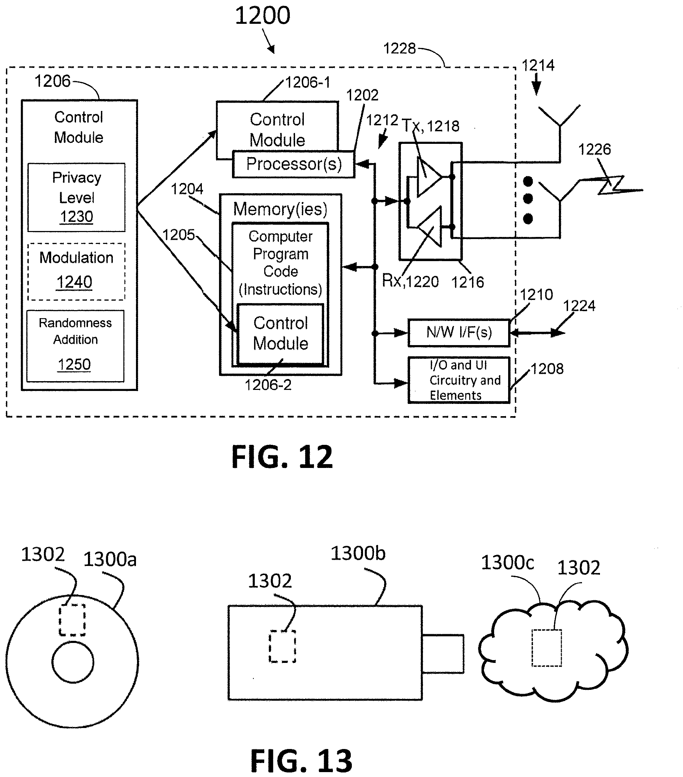

FIG. 12 is an example apparatus 1200, which may be implemented in hardware, configured to implement the examples described herein. The apparatus 1200 comprises at least one processor 1202 (e.g. an FPGA and/or CPU), one or more memories 1204 including computer program code 1205, the computer program code 1205 having instructions to carry out the methods described herein, wherein the at least one memory 1204 and the computer program code 1205 are configured to, with the at least one processor 1202, cause the apparatus 1200 to implement circuitry, a process, component, module, or function (implemented with control module 1206) to implement the examples described herein, including a privacy enhancing technique for learning location dependent data of UEs used for improving quality of service. The memory 1204 may be a non-transitory memory, a transitory memory, a volatile memory (e.g. RAM), or a non-volatile memory (e.g. ROM).

Privacy 1230 of the control module 1206 implements determination of the privacy level such as $\varepsilon$. Optionally included modulation 1240 of the control module 1206 may implement constellation selection and/or constellation use. Randomness addition 1250 of the control module 1206 may implement addition of randomness such as with a PRNG or randomized response method (e.g. k-rr).

The apparatus 1200 includes a display and/or I/O interface 1208, which includes user interface (UI) circuitry and elements, that may be used to display aspects or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 1200 includes one or more communication e.g. network (N/W) interfaces (I/F(s)) 1210. The communication I/F(s) 1210 may be wired and/or wireless and communicate over the Internet/other network(s) via any communication technique including via one or more links 1224. The link(s) 1224 may be the link(s) 131 and/or 176 from FIG. 1. The link(s) 131 and/or 176 from FIG. 1 may also be implemented using transceiver(s) 1216 and corresponding wireless link(s) 1226. The communication I/F(s) 1210 may comprise one or more transmitters or one or more receivers.

The transceiver 1216 comprises one or more transmitters 1218 and one or more receivers 1220. The transceiver 1216 and/or communication I/F(s) 1210 may comprise standard well-known components such as an amplifier, filter, frequency-converter, (de)modulator, and encoder/decoder circuitries and one or more antennas, such as antennas 1214 used for communication over wireless link 1226.

The control module 1206 of the apparatus 1200 comprises one of or both parts 1206-1 and/or 1206-2, which may be implemented in a number of ways. The control module 1206 may be implemented in hardware as control module 1206-1, such as being implemented as part of the one or more processors 1202. The control module 1206-1 may be implemented also as an integrated circuit or through other hardware such as a programmable gate array. In another example, the control module 1206 may be implemented as control module 1206-2, which is implemented as computer program code (having corresponding instructions) 1205 and is executed by the one or more processors 1202. For instance, the one or more memories 1204 store instructions that, when executed by the one or more processors 1202, cause the apparatus 1200 to perform one or more of the operations as described herein. Furthermore, the one or more processors 1202, the one or more memories 1204, and example algorithms (e.g., as flowcharts and/or signaling diagrams), encoded as instructions, programs, or code, are means for causing performance of the operations described herein.

The apparatus 1200 to implement the functionality of control 1206 may be UE 110, RAN node 170 (e.g. gNB), or network element(s) 190. Thus, processor 1202 may correspond to processor(s) 120, processor(s) 152 and/or processor(s) 175, memory 1204 may correspond to one or more memories 125, one or more memories 155 and/or one or more memories 171, computer program code 1205 may correspond to computer program code 123, computer program code 153, and/or computer program code 173, control module 1206 may correspond to module 140-1, module 140-2, module 150-1, and/or module 150-2, and communication I/F(s) 1210 and/or transceiver 1216 may correspond to transceiver 130, antenna(s) 128, transceiver 160, antenna(s) 158, N/W I/F(s) 161, and/or N/W I/F(s) 180. Alternatively, apparatus 1200 and its elements may not correspond to either of UE 110, RAN node 170, or network element(s) 190 and their respective elements, as apparatus 1200 may be part of a self-organizing/optimizing network (SON) node or other node, such as a node in a cloud. Apparatus 1200 may also correspond to 5GC node 1612 or OAM 1614.

The apparatus 1200 may also be distributed throughout the network (e.g. 100) including within and between apparatus 1200 and any network element (such as a network control element (NCE) 190 and/or the RAN node 170 and/or the UE 110).

Interface 1212 enables data communication and signaling between the various items of apparatus 1200, as shown in FIG. 12. For example, the interface 1212 may be one or more buses such as address, data, or control buses, and may include any interconnection mechanism, such as a series of lines on a motherboard or integrated circuit, fiber optics or other optical communication equipment, and the like. Computer program code (e.g. instructions) 1205, including control 1206 may comprise object-oriented software configured to pass data or messages between objects within computer program code 1205. The apparatus 1200 need not comprise each of the features mentioned, or may comprise other features as well. The various components of apparatus 1200 may at least partially reside in a common housing 1228, or a subset of the various components of apparatus 1200 may at least partially be located in different housings, which different housings may include housing 1228.

FIG. 13 shows a schematic representation of non-volatile memory media 1300a (e.g. computer/compact disc (CD) or digital versatile disc (DVD)) and 1300b (e.g. universal serial bus (USB) memory stick) and 1300c (e.g. cloud storage for downloading instructions and/or parameters 1302) storing instructions and/or parameters 1302 which when executed by a processor allows the processor to perform one or more of the steps of the methods described herein.

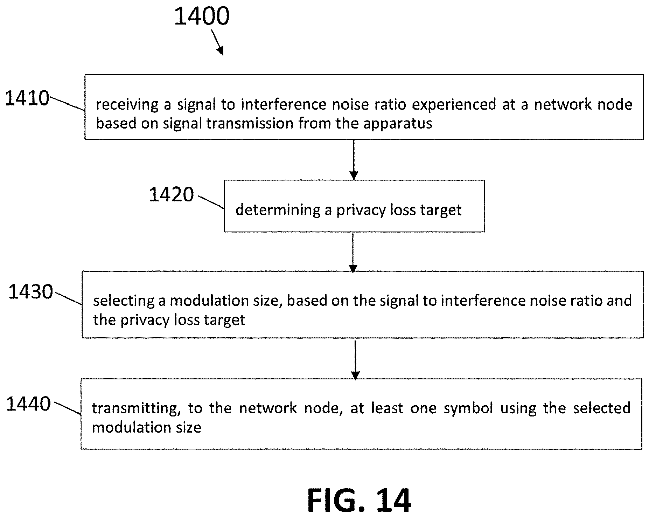

FIG. 14 is an example method 1400, based on the example embodiments described herein. At 1410, the method includes receiving a signal to interference noise ratio experienced at a network node based on signal transmission from the apparatus. At 1420, the method includes determining a privacy loss target. At 1430, the method includes selecting a modulation size, based on the signal to interference noise ratio and the privacy loss target. At 1440, the method includes transmitting, to the network node, at least one symbol using the selected modulation size. Method 1400 may be performed with UE 110 or apparatus 1200.

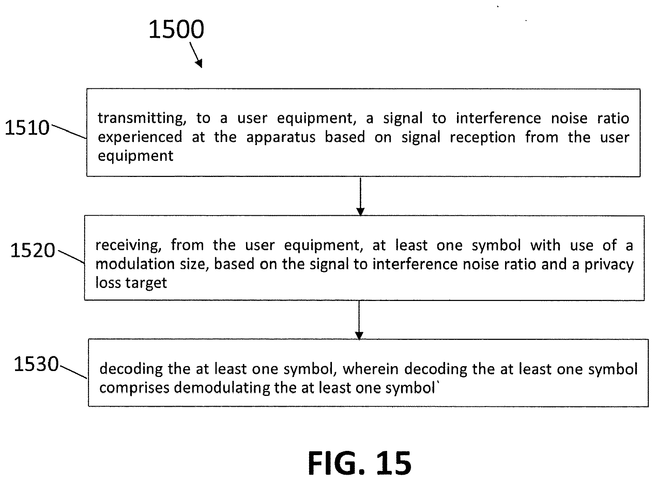

FIG. 15 is an example method 1500, based on the example embodiments described herein. At 1510, the method includes transmitting, to a user equipment, a signal to interference noise ratio experienced at the apparatus based on signal reception from the user equipment. At 1520, the method includes receiving, from the user equipment, at least one symbol with use of a modulation size, based on the signal to interference noise ratio and a privacy loss target. At 1530, the method includes decoding the at least one symbol, wherein decoding the at least one symbol comprises demodulating the at least one symbol. Method 1500 may be performed with RAN node 170 or apparatus 1200.

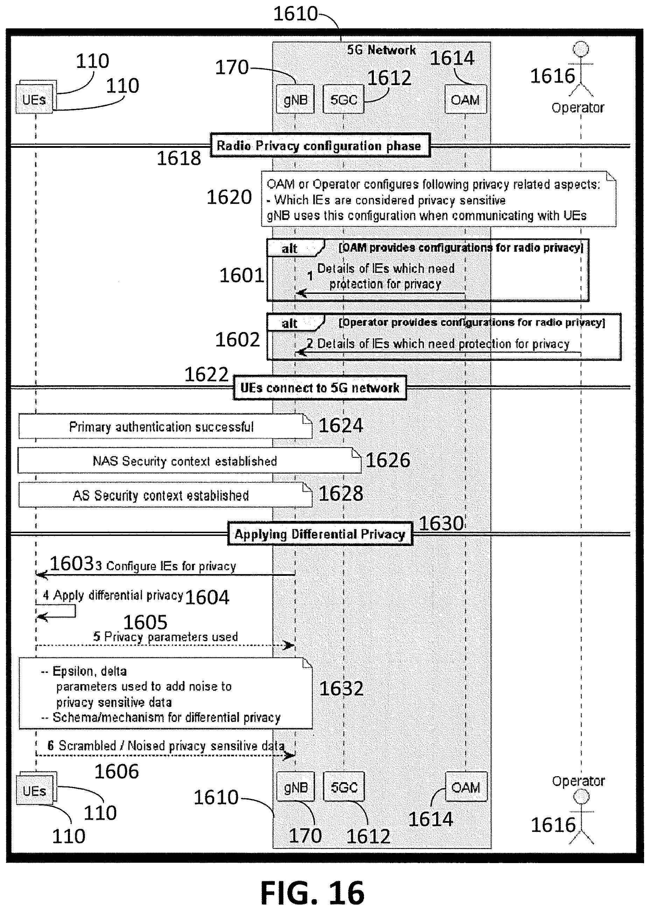

FIG. 16 is a signaling diagram of a privacy method. Steps 1 (1601) and 2 (1602) indicate that either operator 1616 or OAM 1614 can configure the gNB 170 with information about which IEs will need privacy protection. In step 3 (1603), gNB 170 sends this configuration to UEs 110 after AS security context is established (1628). In step 4 (1604), UE 110 applies differential privacy on IEs which it needs to secure. In step 5 (1605), UEs 110 update gNB 170 with the differential privacy related parameters it has used. Different UEs 110 may use different parameters, but this is communicated in a secure AS security context established (1628) before step 3 (1603) independently for each UE 110. In step 6 (1606), UE 110 sends scrambled/noised data to gNB 170.

Thus, in FIG. 16 signaling is performed with UEs 110, the core network 1610, and operator 1616. The core network 1610 includes gNB 170, 5GC 1612, and OAM 1614. Radio privacy configuration phase 1618 includes items 1620, 1601, and 1602. At 1620, the OAM 1614 or operator 1616 configures privacy related aspects including configuring a set of one or more information elements (IEs) to be considered privacy sensitive. The gNB 170 uses this configuration when in communication with the UEs 110. In one alternative (1601), the OAM 1614 provides to the gNB 170 the configurations for radio privacy including details of one or more IEs which need protection for privacy. In another alternative (1602), the operator 1616 provides to the gNB 170 the configurations for radio privacy including details of one or more IEs which need protection for privacy.

At 1622, UEs 110 connect to the 5G network 1610 which connection includes items 1624, 1626, and 1628. At 1624, the UEs 110 and gNB 170 engage in successful primary authentication. At 1626, the UEs 110 and 5GC 1612 establish NAS security context. At 1628, the UEs 110 and gNB 170 establish AS security context.

At 1630, differential privacy is applied, which includes items 1603, 1604, 1605, 1632, and 1606. At 1603, the gNB 170 transmits to the UEs 110 a configuration of one or more IEs for privacy. At 1604, the UEs 110 apply differential privacy. At 1605, the UEs 110 transmit to the gNB 170 the privacy parameters used, where as indicated at 1632, the privacy parameters used to add noise to the privacy sensitive data may include epsilon ($\varepsilon$), delta ($\delta$), and/or the schema or mechanism used for differential privacy. At 1606, the UEs 110 transmit scrambled and noised privacy sensitive data to the gNB 170.

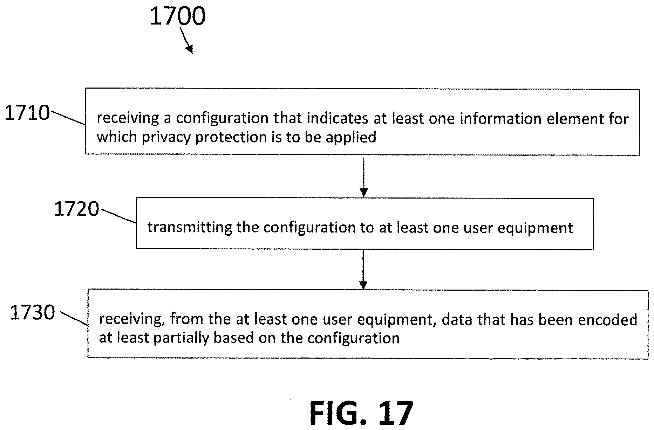

FIG. 17 is an example method 1700, based on the examples described herein. At 1710, the method includes receiving a configuration that indicates at least one information element for which privacy protection is to be applied. At 1720, the method includes transmitting the configuration to at least one user equipment. At 1730, the method includes receiving, from the at least one user equipment, data that has been encoded at least partially based on the configuration. Method 1700 may be performed with RAN node 170 or apparatus 1200.

The following examples are provided and described herein.

Example 1. An apparatus including: at least one processor; and at least one memory storing instructions that, when executed by the at least one processor, cause the apparatus at least to: receive a signal to interference noise ratio experienced at a network node based on signal transmission from the apparatus; determine a privacy loss target; select a modulation size, based on the signal to interference noise ratio and the privacy loss target; and transmit, to the network node, at least one symbol using the selected modulation size.

Example 2. The apparatus of example 1, wherein transmission of the at least one symbol using a modulation having a first size has a lower privacy loss than transmission of the at least one symbol using a modulation having a second size, when the first size is greater than the second size.

Example 3. The apparatus of example 2, wherein the instructions, when executed by the at least one processor, cause the apparatus at least to: select the modulation having the first size, when a privacy loss associated with the modulation having the first size is closer to the privacy loss target than a privacy loss associated with the modulation having the second size; and select the modulation having the second size, when the privacy loss associated with the modulation having the second size is closer to the privacy loss target than the privacy loss associated with the modulation having the first size.

Example 4. The apparatus of any of examples 1 to 3, wherein the instructions, when executed by the at least one processor, cause the apparatus at least to: select the modulation size based on an accuracy target for data comprising of the at least one symbol, wherein a modulation having a first size has a higher accuracy than a modulation having a second size, when the first size is less than the second size.

Example 5. The apparatus of example 4, wherein the instructions, when executed by the at least one processor, cause the apparatus at least to: select the modulation having the first size, when an accuracy associated with the modulation having the first size is closer to the accuracy target than an accuracy associated with the modulation having the second size; and select the modulation having the second size, when the accuracy associated with the modulation having the second size is closer to the accuracy target than the accuracy associated with the modulation having the first size.

Example 6. The apparatus of any of examples 1 to 5, wherein the instructions, when executed by the at least one processor, cause the apparatus at least to: determine a privacy loss generated with the selected modulation size, given the signal to interference noise ratio; determine whether the privacy loss meets the privacy loss target; determine an amount of randomness to add for the transmission of the at least one symbol to meet the privacy loss target, in response to the privacy loss not meeting the privacy loss target; and add the amount of randomness to the transmission of the at least one symbol.

Example 7. The apparatus of example 6, wherein adding the amount of randomness to the transmission of the at least one symbol is performed using a randomized response method.

Example 8. The apparatus of example 7, wherein the randomized response method comprises: determining a probability for selecting one of the at least one symbol at random for an encoding of a sequence of the at least one symbol.

Example 9. The apparatus of example 8, wherein the instructions, when executed by the at least one processor, cause the apparatus at least to: determine a value equal to a number of at least one symbol in a constellation minus one, wherein the number of the at least one symbol in the constellation is based on the modulation size; select an original symbol within the sequence of the at least one symbol with a probability equal to one minus the probability; and select one of the other symbols that is not the original symbol within the sequence of the at least one symbol with a probability equal to the probability divided by the value.

Example 10. The apparatus of any of examples 8 to 9, wherein the instructions, when executed by the at least one processor, cause the apparatus at least to: determine the probability for selecting one of the at least one symbol based on the privacy loss target, wherein the randomized response method used with a first probability has a lower privacy loss than the randomized response method used with a second probability, when the first probability is higher than the second probability.

Example 11. The apparatus of example 10, wherein the instructions, when executed by the at least one processor, cause the apparatus at least to: determine the probability to be the first probability, when a privacy loss associated with the randomized response method using the first probability is closer to the privacy loss target than a privacy loss associated with the randomized response method using the second probability; and determine the probability to be the second probability, when the privacy loss associated with the randomized response method using the second probability is closer to the privacy loss target than the privacy loss associated with the randomized response method using the first probability.

Example 12. The apparatus of any of examples 8 to 11, wherein the instructions, when executed by the at least one processor, cause the apparatus at least to: determine the probability for selecting one of the at least one symbol based on an accuracy target for data comprising the at least one symbol, wherein the randomized response method used with a first probability has a lower accuracy than the randomized response method used with a second probability, when the first probability is higher than the second probability.

Example 13. The apparatus of example 12, wherein the instructions, when executed by the at least one processor, cause the apparatus at least to: determine the probability to be the first probability, when an accuracy associated with the randomized response method using the first probability is closer to the accuracy target than an accuracy associated with the randomized response method using the second probability; and determine the probability to be the second probability, when the accuracy associated with the randomized response method using the second probability is closer to the accuracy target than the accuracy associated with the randomized response method using the first probability.

Example 14. The apparatus of any of examples 1 to 13, wherein the instructions, when executed by the at least one processor, cause the apparatus at least to: determine the privacy loss target based on an accuracy target, the accuracy target related an accuracy of the transmitted at least one symbol.

Example 15. The apparatus of any of examples 6 to 14, wherein the instructions, when executed by the at least one processor, cause the apparatus at least to: determine the privacy loss based on a set of at least one probability of sample switching of thermal noise for the at least one symbol, wherein a size of the set is based on the modulation size.

Example 16. The apparatus of any of examples 6 to 15, wherein the instructions, when executed by the at least one processor, cause the apparatus at least to: determine the privacy loss at least partially based on a ratio of a signal power to a thermal noise power, wherein the ratio is scaled by a value based at least partially on the modulation size.

Example 17. The apparatus of any of examples 6 to 16, wherein adding the amount of randomness to the transmission of the at least one symbol is performed using a pseudo random number generator.

Example 18. The apparatus of any of examples 1 to 17, wherein the instructions, when executed by the at least one processor, cause the apparatus at least to: transmit, to the network node, at least one pilot signal; and receive, periodically from the network node based on the transmitted at least one pilot signal, the signal to interference noise ratio experienced at the network node based on signal transmission from the apparatus.

Example 19. The apparatus of any of examples 1 to 18, wherein the at least one symbol gives an indication of a location of the apparatus.

Example 20. The apparatus of any of examples 1 to 19, wherein the instructions, when executed by the at least one processor, cause the apparatus at least to: receive, from the network node, a configuration that indicates at least one information element for which privacy protection is to be applied; encode the at least one symbol using differential privacy, at least partially based on the configuration; transmit, to the network node, at least one parameter used to encode the at least one symbol, the at least one parameter comprising a differential privacy related parameter; and transmit, to the network node, the encoded at least one symbol.

Example 21. An apparatus including: at least one processor; and at least one memory storing instructions that, when executed by the at least one processor, cause the apparatus at least to: transmit, to a user equipment, a signal to interference noise ratio experienced at the apparatus based on signal reception from the user equipment; receive, from the user equipment, at least one symbol with use of a modulation size, based on the signal to interference noise ratio and a privacy loss target; and decode the at least one symbol, wherein decoding the at least one symbol comprises demodulating the at least one symbol.

Example 22. The apparatus of example 21, wherein the at least one symbol is received with use of the modulation size selected based on the privacy loss target, wherein reception of the at least one symbol using a modulation having a first size has a lower privacy loss than reception of the at least one symbol using a modulation having a second size, when the first size is greater than the second size.

Example 23. The apparatus of example 22, wherein: the modulation having the first size is selected, when a privacy loss associated with the modulation having the first size is closer to the privacy loss target than a privacy loss associated with the modulation having the second size; and the modulation having the second size is selected, when the privacy loss associated with the modulation having the second size is closer to the privacy loss target than the privacy loss associated with the modulation having the first size.

Example 24. The apparatus of any of examples 21 to 23, wherein the at least one symbol is received with use of a modulation size selected based on an accuracy target for data comprising the decoded at least one symbol, wherein a modulation having a first size has a higher accuracy than a modulation having a second size, when the first size is less than the second size.

Example 25. The apparatus of example 24, wherein: the modulation having the first size is selected, when an accuracy associated with the modulation having the first size is closer to the accuracy target than an accuracy associated with the modulation having the second size; and the modulation having the second size is selected, when the accuracy associated with the modulation having the second size is closer to the accuracy target than the accuracy associated with the modulation having the first size.

Example 26. The apparatus of any of examples 21 to 25, wherein the instructions, when executed by the at least one processor, cause the apparatus at least to: measure, within a hardware trusted zone of the apparatus, a signal to noise interference ratio of the at least one symbol; receive, from the user equipment, the modulation size; determine a privacy loss generated with the modulation size, given the measured signal to interference noise ratio; determine whether the privacy loss meets the privacy loss target; determine an amount of randomness to add to the at least one symbol during the decoding of the at least one symbol to meet the privacy loss target, in response to the privacy loss not meeting the privacy loss target; and add the amount of randomness to the at least one symbol during the decoding of the at least one symbol.

Example 27. The apparatus of example 26, wherein adding the amount of randomness to the at least one symbol during the decoding is performed using a randomized response method.

Example 28. The apparatus of example 27, wherein the randomized response method comprises: determining a probability for selecting one of the at least one symbol at random for an encoding of a sequence of the at least one symbol.

Example 29. The apparatus of example 28, wherein the instructions, when executed by the at least one processor, cause the apparatus at least to: determine a value equal to a number of at least one symbol in a constellation minus one, wherein the number of the at least one symbol in the constellation is based on the modulation size; select an original symbol within the sequence of the at least one symbol with a probability equal to one minus the probability; and select one of the other symbols that is not the original symbol within the sequence of the at least one symbol with a probability equal to the probability divided by the value.

Example 30. The apparatus of any of examples 28 to 29, wherein the instructions, when executed by the at least one processor, cause the apparatus at least to: determine the probability for one of the at least one symbol based on the privacy loss target, wherein the randomized response method used with a first probability has a lower privacy loss than the randomized response method used with a second probability, when the first probability is higher than the second probability.

Example 31. The apparatus of example 30, wherein the instructions, when executed by the at least one processor, cause the apparatus at least to: determine the probability to be the first probability, when a privacy loss associated with the randomized response method using the first probability is closer to the privacy loss target than a privacy loss associated with the randomized response method using the second probability; and determine the probability to be the second probability, when the privacy loss associated with the randomized response method using the second probability is closer to the privacy loss target than the privacy loss associated with the randomized response method using the first probability.

Example 32. The apparatus of any of examples 28 to 31, wherein the instructions, when executed by the at least one processor, cause the apparatus at least to: determine the probability for selecting one of the at least one symbol based on an accuracy target for data comprising the decoded at least one symbol, wherein the randomized response method used with a first probability has a lower accuracy than the randomized response method used with a second probability, when the first probability is higher than the second probability.

Example 33. The apparatus of example 32, wherein the instructions, when executed by the at least one processor, cause the apparatus at least to: determine the probability to be the first probability, when an accuracy associated with the randomized response method using the first probability is closer to the accuracy target than an accuracy associated with the randomized response method using the second probability; and determine the probability to be the second probability, when the accuracy associated with the randomized response method using the second probability is closer to the accuracy target than the accuracy associated with the randomized response method using the first probability.

Example 34. The apparatus of any of examples 21 to 33, wherein the privacy loss target is based on an accuracy target, the accuracy target related to an accuracy of the at least one symbol.

Example 35. The apparatus of any of examples 26 to 34, wherein the instructions, when executed by the at least one processor, cause the apparatus at least to: determine the privacy loss based on a set of at least one probability of sample switching of thermal noise for the at least one symbol, wherein a size of the set is based on the modulation size.

Example 36. The apparatus of any of examples 26 to 35, wherein the instructions, when executed by the at least one processor, cause the apparatus at least to: determine the privacy loss at least partially based on a ratio of a signal power to a thermal noise power, wherein the ratio is scaled by a value based at least partially on the modulation size.

Example 37. The apparatus of any of examples 26 to 36, wherein adding the amount of randomness to the at least one symbol during the decoding is performed using a pseudo random number generator.

Example 38. The apparatus of any of examples 21 to 37, wherein the instructions, when executed by the at least one processor, cause the apparatus at least to: receive, from the user equipment, at least one pilot signal; and transmit, periodically from the apparatus based on the received at least one pilot signal, the signal to interference noise ratio experienced at the apparatus based on signal reception from the user equipment.

Example 39. The apparatus of any of examples 21 to 38, wherein the at least one symbol gives an indication of a location of the user equipment.

Example 40. The apparatus of any of examples 21 to 39, wherein the instructions, when executed by the at least one processor, cause the apparatus at least to: receive a configuration that indicates at least one information element for which privacy protection is to be applied; wherein the configuration is received from at least one of: an operations, administration, and maintenance network node, or an operator; transmit the configuration to at least one user equipment; receive, from the at least one user equipment, at least one parameter used to encode the at least one symbol, the at least one parameter comprising a differential privacy related parameter; and receive, from the at least one user equipment, data that has been encoded at least partially based on the configuration.

Example 41. An apparatus including: at least one processor; and at least one memory storing instructions that, when executed by the at least one processor, cause the apparatus at least to: receive a configuration that indicates at least one information element for which privacy protection is to be applied; transmit the configuration to at least one user equipment; and receive, from the at least one user equipment, data that has been encoded at least partially based on the configuration.

Example 42. The apparatus of example 41, wherein the configuration is received from at least one of: an operations, administration, and maintenance network node, or an operator.

Example 43. A method including: receiving a signal to interference noise ratio experienced at a network node based on signal transmission from the apparatus; determining a privacy loss target; selecting a modulation size, based on the signal to interference noise ratio and the privacy loss target; and transmitting, to the network node, at least one symbol using the selected modulation size.

Example 44. A method including: transmitting, to a user equipment, a signal to interference noise ratio experienced at the apparatus based on signal reception from the user equipment; receiving, from the user equipment, at least one symbol with use of a modulation size, based on the signal to interference noise ratio and a privacy loss target; and decoding the at least one symbol, wherein decoding the at least one symbol comprises demodulating the at least one symbol.

Example 45. A method including: receiving a configuration that indicates at least one information element for which privacy protection is to be applied; transmitting the configuration to at least one user equipment; and receiving, from the at least one user equipment, data that has been encoded at least partially based on the configuration.

Example 46. An apparatus including: means for receiving a signal to interference noise ratio experienced at a network node based on signal transmission from the apparatus; means for determining a privacy loss target; means for selecting a modulation size, based on the signal to interference noise ratio and the privacy loss target; and means for transmitting, to the network node, at least one symbol using the selected modulation size.

Example 47. An apparatus including: means for transmitting, to a user equipment, a signal to interference noise ratio experienced at the apparatus based on signal reception from the user equipment; means for receiving, from the user equipment, at least one symbol with use of a modulation size, based on the signal to interference noise ratio and a privacy loss target; and means for decoding the at least one symbol, wherein decoding the at least one symbol comprises demodulating the at least one symbol.

Example 48. An apparatus including: means for receiving a configuration that indicates at least one information element for which privacy protection is to be applied; means for transmitting the configuration to at least one user equipment; and means for receiving, from the at least one user equipment, data that has been encoded at least partially based on the configuration.

Example 49. A non-transitory program storage device readable by a machine, tangibly embodying a program of instructions executable by the machine for performing operations, the operations including: receiving a signal to interference noise ratio experienced at a network node based on signal transmission from the apparatus; determining a privacy loss target; selecting a modulation size, based on the signal to interference noise ratio and the privacy loss target; and transmitting, to the network node, at least one symbol using the selected modulation size.

Example 50. A non-transitory program storage device readable by a machine, tangibly embodying a program of instructions executable by the machine for performing operations, the operations including: transmitting, to a user equipment, a signal to interference noise ratio experienced at the apparatus based on signal reception from the user equipment; receiving, from the user equipment, at least one symbol with use of a modulation size, based on the signal to interference noise ratio and a privacy loss target; and decoding the at least one symbol, wherein decoding the at least one symbol comprises demodulating the at least one symbol.

Example 51. A non-transitory program storage device readable by a machine, tangibly embodying a program of instructions executable by the machine for performing operations, the operations including: receiving a configuration that indicates at least one information element for which privacy protection is to be applied; transmitting the configuration to at least one user equipment; and receiving, from the at least one user equipment, data that has been encoded at least partially based on the configuration.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memories as described herein may be implemented using any suitable data storage technology, such as semiconductor based memory devices, flash memory, magnetic memory devices and systems, optical memory devices and systems, non-transitory memory, transitory memory, fixed memory and removable memory. The memories may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memories that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

It should be understood that the foregoing description is only illustrative. Various alternatives and modifications may be devised by those skilled in the art. For example, features recited in the various dependent claims could be combined with each other in any suitable combination(s). In addition, features from different example embodiments described above could be selectively combined into a new example embodiment. Accordingly, this description is intended to embrace all such alternatives, modifications and variances which fall within the scope of the appended claims.

The following acronyms and abbreviations that may be found in the specification and/or the drawing figures are given as follows (the abbreviations and acronyms may be appended with each other or with other characters using e.g. a dash, hyphen, slash, or number, and may be case insensitive):

| | |
|---|---|
| 4G | fourth generation |
| 5G | fifth generation |
| 5GC | 5G core network |
| ACK | acknowledgement |
| AMF | access and mobility management function |
| AS | access stratum |
| ASIC | application-specific integrated circuit |
| BS | base station |
| CCPA | California Consumer Privacy Act |
| CD | compact/computer disc |
| CP | cyclic prefix |
| CPU | central processing unit |
| CU | central unit or centralized unit |
| DP | differential privacy |
| DR14 | Dwork, C. and Roth, A. (2014). The algorithmic foundations of differential privacy. Found. Trends Theor. Comput. Sci., 9(3-4):211-407. |
| DSP | digital signal processor |
| DVD | digital versatile disc |
| eNB | evolved Node B (e.g., an LTE base station) |
| EN-DC | E-UTRAN new radio - dual connectivity |
| en-gNB | node providing NR user plane and control plane protocol terminations towards the UE, and acting as a secondary node in EN-DC |
| E-UTRA | evolved universal terrestrial radio access, i.e., the LTE radio access technology |
| E-UTRAN | E-UTRA network |
| F1 | interface between the CU and the DU |
| FPGA | field-programmable gate array |
| GDPR | general data protection regulations |
| gNB | base station for 5G/NR, i.e., a node providing NR user plane and control plane protocol terminations towards the UE, and connected via the NG interface to the 5GC |
| IAB | integrated access and backhaul |
| IE | information element |
| IETF | Internet Engineering Task Force |
| I/F | interface |
| I/O | input/output |
| K-RR | k-ary randomized response, where k is the number of categories, e.g. categorical answers to a query, such as answers limited to "yes" or "no" when k=2 |
| LDP | local differential privacy |
| LMF | location management function |
| LTE | long term evolution (4G) |
| MAC | medium access control |
| MME | mobility management entity |

| | |
|---|---|
| MRO | mobility robustness optimization |
| NAS | non access stratum |
| NCE | network control element |
| ng or NG | new generation |
| ng-eNB | new generation eNB |
| NG-RAN | new generation radio access network |
| NR | new radio |
| N/W | network |
| OAM | operations, administration and maintenance |
| PC | power control |
| PDA | personal digital assistant |
| PDCP | packet data convergence protocol |
| PHY | physical layer |
| PRNG | pseudo random number generator |
| QAM | quadrature amplitude modulation |
| Q(x) | function that gives the probability that a standard normal random variable takes a value larger than x |
| RAM | random access memory |
| RAN | radio access network |
| RHM | radio heat map |
| RLC | radio link control |
| ROM | read-only memory |
| RRC | radio resource control |
| RU | radio unit |
| Rx | receiver or reception |
| SDAP | service data adaptation protocol |
| SGW | serving gateway |
| SINR | signal to interference and noise ratio |
| SMF | session management function |
| SNR | signal to noise ratio |
| SON | self-organizing/optimizing network |
| TRP | transmission reception point |
| Tx | transmitter or transmission |
| UAV | unmanned aerial vehicle |
| UE | user equipment (e.g., a wireless, typically mobile device) |
| UPF | user plane function |
| URLLC | ultra reliable low latency communications |
| USB | universal serial bus |
| X2 | network interface between RAN nodes and between RAN and the core network |
| Xn | network interface between NG-RAN nodes |

**Claims**

1. An apparatus comprising:

   means for receiving a signal to interference noise ratio experienced at a network node based on signal transmission from the apparatus;
   means for determining a privacy loss target;
   means for selecting a modulation size, based on the signal to interference noise ratio and the privacy loss target; and
   means for transmitting, to the network node, at least one symbol using the selected modulation size.

2. The apparatus of claim 1, further comprising:
   means for determining the privacy loss target based on an accuracy target, the accuracy target related an accuracy of the transmitted at least one symbol.

3. The apparatus of claim 1, further comprising:

means for selecting a modulation having a first size, when a privacy loss associated with the modulation having the first size is closer to the privacy loss target than a privacy loss associated with a modulation having a second size; and

means for selecting the modulation having the second size, when the privacy loss associated with the modulation having the second size is closer to the privacy loss target than the privacy loss associated with the modulation having the first size.

4. The apparatus of claim 1, further comprising:

means for determining a privacy loss generated with the selected modulation size, given the signal to interference noise ratio;

means for determining whether the privacy loss meets the privacy loss target; and

means for determining an amount of randomness to add for the transmission of the at least one symbol to meet the privacy loss target, in response to the privacy loss not meeting the privacy loss target; and

means for adding the amount of randomness to the transmission of the at least one symbol using a randomized response method.

5. The apparatus of claim 4, wherein the randomized response method comprises:
means for determining a probability for selecting one of the at least one symbol at random for an encoding of a sequence of the at least one symbol.

6. The apparatus of claim 5, further comprising:

means for determining a value equal to a number of at least one symbol in a constellation minus one, wherein the number of the at least one symbol in the constellation is based on the modulation size;

means for selecting an original symbol within the sequence of the at least one symbol with a probability equal to one minus the probability; and

means for selecting one of the other symbols that is not the original symbol within the sequence of the at least one symbol with a probability equal to the probability divided by the value.

7. The apparatus of claim 5, further comprising:

means for determining the probability to be a first probability, when a privacy loss associated with the randomized response method using the first probability is closer to the privacy loss target than a privacy loss associated with the randomized response method using a second probability; and

means for determining the probability to be the second probability, when the privacy loss associated with the randomized response method using the second probability is closer to the privacy loss target than the privacy loss associated with the randomized response method using the first probability.

8. The apparatus of claim 5, further comprising:

means for determining the probability to be a first probability, when an accuracy associated with the randomized response method using the first probability is closer to the accuracy target than an accuracy associated with the randomized response method using a second probability; and

means for determining the probability to be the second probability, when the accuracy associated with the randomized response method using the second probability is closer to the accuracy target than the accuracy associated with the randomized response method using the first probability.

9. The apparatus of claim 4, further comprising:

means for determining the privacy loss based on a set of at least one probability of sample switching of thermal noise for the at least one symbol, wherein a size of the set is based on the modulation size; and

means for determining the privacy loss at least partially based on a ratio of a signal power to a thermal noise power, wherein the ratio is scaled by a value based at least partially on the modulation size.

10. An apparatus comprising:

means for transmitting, to a user equipment, a signal to interference noise ratio experienced at the apparatus based on signal reception from the user equipment;
means for receiving, from the user equipment, at least one symbol with use of a modulation size, based on the signal to interference noise ratio and a privacy loss target; and
means for decoding the at least one symbol, wherein decoding the at least one symbol comprises demodulating the at least one symbol.

11. The apparatus of claim 10, wherein the privacy loss target is based on an accuracy target, the accuracy target related to an accuracy of the at least one symbol.

12. The apparatus of claim 10, wherein:

a modulation having a first size is selected, when a privacy loss associated with the modulation having the first size is closer to the privacy loss target than a privacy loss associated with a modulation having a second size; and the modulation having the second size is selected, when the privacy loss associated with the modulation having the second size is closer to the privacy loss target than the privacy loss associated with the modulation having the first size.

13. The apparatus of claim 10, further comprising:

means for measuring, within a hardware trusted zone of the apparatus, a signal to noise interference ratio of the at least one symbol;
means for receiving, from the user equipment, the modulation size;
means for determining a privacy loss generated with the modulation size, given the measured signal to interference noise ratio;
means for determining whether the privacy loss meets the privacy loss target; and
means for determining an amount of randomness to add to the at least one symbol during the decoding of the at least one symbol to meet the privacy loss target, in response to the privacy loss not meeting the privacy loss target; and
means for adding the amount of randomness to the at least one symbol during the decoding of the at least one symbol using a randomized response method.

14. A method for a user equipment comprising:

receiving a signal to interference noise ratio experienced at a network node based on signal transmission from the user equipment;
determining a privacy loss target;
selecting a modulation size, based on the signal to interference noise ratio and the privacy loss target; and
transmitting, to the network node, at least one symbol using the selected modulation size.

15. A method for a network node comprising:

transmitting, to a user equipment, a signal to interference noise ratio experienced at the network node based on signal reception from the user equipment;
receiving, from the user equipment, at least one symbol with use of a modulation size, based on the signal to interference noise ratio and a privacy loss target; and
decoding the at least one symbol, wherein decoding the at least one symbol comprises demodulating the at least one symbol.

**FIG. 1**

EP 4 459 901 A1

**FIG. 2**

FIG. 3

EP 4 459 901 A1

Privacy Loss as a function of QAM constellation

FIG. 4

**FIG. 5**

601

1. UE reports that it has n contribution data available + pilots

602

2. Public key exchange and Encryption

603

3. UE uses the expected SINR, Figure 4 and Figure 5 to see how much is and which constellation is required.

604

4. UE selects the constellation and uses K-RR to add randomness.

605

5. Send BS the selected constellation

606

6. UE transmits the data + pilots

651

1. Public key exchange procedure according to some standard

2. BS reports the received SINR and

652 channel to the UE, from pilots

653

3. BS: sends ACK upon receiving data. The ACK message is produced only as a sign of signal detection, as there is

654 no channel coding.

4. Repeat step 2.

**FIG. 6**

EP 4 459 901 A1

702

**Encrypt**

706

**Channel coding**

708

**Modulation / mapper**

710

**Pilot/CP insertion**

704

707

712

705

701

~~SINR reports~~

**Constellation number k-RR = Main Algorithm( SINR)**

**Channel**

717

720

**Decrypt**

718

**decoder**

716

**De-Modulation / de-mapper**

714

**Pilot/CP removal**

# FIG. 7

802

Compute the probabilities of sample switching of thermal noise, $q = [q_0 \; q_1, q_2, q_3]$ for each of the symbols

804

Solve for the given $\epsilon$ for p, which is the probability of K-RR, using bisection iterative search on (3)

806

Sample the symbols according to e.g. p/3 p/3 p/3 and 1-p for the symbol itself

# FIG. 8

902 | SINR measurement uplink + transmit the value to the UE.

904 | The UE uses the reported SINR measured at the BS and his own $\epsilon$ target to choose the constellation scheme from Fig 4.

906 | UE communicates the chosen constellation to BS in a signal

908 | UE transmit the symbols using the mapper on the chosen constellation + pilots.

910 | BS issues ACK upon detecting the signal

# FIG. 9A

EP 4 459 901 A1

| 952 | Step 2 of BS: SINR measurement uplink + transmit the value to the UE. |

| 954 | Step 3 of UE: The UE uses the reported SINR measured at the BS and his own $\epsilon$ target to choose the constellation scheme from Fig 4. |

956 — Can Fig.4 provide all the $\epsilon$ required?

No → | 958 | K-RR method to complementing privacy loss given flowchart of FIG. 8 |

Yes

| 960 | UE communicates the chosen constellation to BS in a signal |

| 962 | UE transmit the symbols using the mapper on the chosen constellation + pilots. |

| 964 | BS issues ACK upon detecting the signal |

# FIG. 9B

**FIG. 10**

## 1100

### 1101

1) UE reports that it has n contribution data available + pilots

**1102**

2) Public key exchange and Encryption

**1103**

3) UE starts transmission, uncoded with the appropriate constellation from Figure 4.

**1104**

4) UE starts transmission of second message.

### 1151

1) Public key exchange procedure according to some standard

**1152** 2) BS reports the received SINR and channel to the UE _ from pilots

**1153** 3) BS: sends ACK upon receiving data. The ACK message is produced only as a sign of signal detection, as there is no channel coding.

...

1154

**1155** N) BS measures the SINR when the whole transmission of uncoded data is finished and adds randomness if not enough. The **BS uses k-RR mechanism and uses FIG. 5**

## FIG. 11

EP 4 459 901 A1

1200

1206 — Control Module

Privacy Level 1230

Modulation 1240

Randomness Addition 1250

1228

1206-1 Control Module

Processor(s)

1202

1212 Tx, 1218

1214

1226

1204

Memory(ies)

1205 — Computer Program Code (Instructions)

Control Module

1206-2

Rx, 1220    1216

1210    1224

N/W I/F(s)

I/O and UI Circuitry and Elements

1208

**FIG. 12**

1302  1300a

1302  1300b

1300c  1302

**FIG. 13**

1400

1410 — receiving a signal to interference noise ratio experienced at a network node based on signal transmission from the apparatus

1420 — determining a privacy loss target

1430 — selecting a modulation size, based on the signal to interference noise ratio and the privacy loss target

1440 — transmitting, to the network node, at least one symbol using the selected modulation size

**FIG. 14**

1500

1510 — transmitting, to a user equipment, a signal to interference noise ratio experienced at the apparatus based on signal reception from the user equipment

1520 — receiving, from the user equipment, at least one symbol with use of a modulation size, based on the signal to interference noise ratio and a privacy loss target

1530 — decoding the at least one symbol, wherein decoding the at least one symbol comprises demodulating the at least one symbol`

# FIG. 15

1610

110
110

170
5G Network
1614
1612
1616

UEs
gNB 5GC
OAM
Operator

1618

Radio Privacy configuration phase

1620

OAM or Operator configures following privacy related aspects:
- Which IEs are considered privacy sensitive
gNB uses this configuration when communicating with UEs

alt          [OAM provides configurations for radio privacy]

1601            1  Details of IEs which need
                   protection for privacy

alt          [Operator provides configurations for radio privacy]

1602            2 Details of IEs which need protection for privacy

1622

UEs connect to 5G network

Primary authentication successful          1624

NAS Security context established          1626

AS Security context established          1628

1630

Applying Differential Privacy

1603  3 Configure IEs for privacy

4 Apply differential privacy 1604

1605
5 Privacy parameters used

-- Epsilon, delta
   parameters used to add noise to          1632
   privacy sensitive data
-- Schema/mechanism for differential privacy

6 Scrambled / Noised privacy sensitive data

1606

UEs

110
110

1610

gNB 5GC

170  1612

OAM

1614

Operator

1616

**FIG. 16**

37

1700

1710 — receiving a configuration that indicates at least one information element for which privacy protection is to be applied

1720 — transmitting the configuration to at least one user equipment

1730 — receiving, from the at least one user equipment, data that has been encoded at least partially based on the configuration

# FIG. 17

Europäisches
Patentamt
European
Patent Office
Office européen
des brevets

# EUROPEAN SEARCH REPORT

Application Number

EP 24 16 9174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 849 374 A1 (ALCATEL LUCENT [FR]) 18 March 2015 (2015-03-18) | 1-4,9-15 | INV. H04K1/00 |
| Y | * abstract * * paragraph [0001] - paragraph [0011] * * paragraph [0013] - paragraph [0038] * * figures 1-5 * | 5-8 | |
| X | Arslan Hüseyin ET AL: "Physical Layer Security for Wireless Sensing and Communication", IET Security Series, 2022, pages 1-359, XP093179568, Retrieved from the Internet: URL:https://digital-library.theiet.org/con tent/books/sc/pbse018e;jsessionid=30pawjju j5igh.x-iet-live-01 [retrieved on 2024-06-27] * Chapters 1-3, 7-8 * | 1-15 | |
| Y | CYNTHIA DWORK ET AL: "The Algorithmic Foundations of Differential Privacy", FOUNDATIONS AND TRENDS IN THEORETICAL COMPUTER SCIENCE, vol. 9, no. 3-4, 2013, pages 211-407, XP055390342, US ISSN: 1551-305X, DOI: 10.1561/0400000042 | 5-8 | TECHNICAL FIELDS SEARCHED (IPC) H04K H04B |
| A | * the whole document * | 2 | |

The present search report has been drawn up for all claims

| Place of search | Date of completion of the search | Examiner |
|---|---|---|
| The Hague | 18 September 2024 | Dujardin, Corinne |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 16 9174

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2024

| Patent document cited in search report | Publication date | Patent family member(s) | Publication date |
|---|---|---|---|
| EP 2849374 A1 | 18-03-2015 | NONE | |

For more details about this annex : see Official Journal of the European Patent Office, No. 12/82